# NEUE EUROPÄISCHE PATENTSCHRIFT

(11) **EP 2 011 555 B2**
(45) Veröffentlichungstag und Bekanntmachung des Hinweises auf die Entscheidung über den Einspruch: **20.09.2017**
(45) Hinweis auf die Patenterteilung: 16.02.2011
(21) Anmeldenummer: 07013311.1
(22) Anmeldetag: 06.07.2007
(51) Int. Cl.: B01D 39/16, A47L 9/14

(54) **Staubsaugerfilterbeutel**
Vacuum filter bag
Sac d'aspirateur

(43) Veröffentlichungstag der Anmeldung: 07.01.2009
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- EP-A- 1 048 335
- EP-A- 1 050 331
- EP-A2- 1 795 248
- EP-B1- 0 246 811
- EP-B1- 0 960 645
- WO-A1-97/40913
- DE-A1- 3 508 941
- DE-C2- 4 410 110
- DE-U- 7 424 655
- DE-U1- 20 209 923
- DE-U1-202005 019 004
- JP-A- H0 630 869
- US-A- 6 156 086

## Beschreibung

Die Erfindung betrifft einen Staubsaugerfilterbeutel mit einem Filtermedium, insbesondere einen Wegwerfstaubsaugerbeutel.

Bei Staubsaugerfilterbeuteln geht die Entwicklung dahin, die Abscheideleistung und gleichzeitig die Standzeit zu erhöhen. Zu diesem Zweck weisen herkömmliche Staubsaugerfilterbeutel im Allgemeinen eine Beutelwand aus mehreren Filtermateriallagen auf. Bei den Filtermateriallagen handelt es sich beispielweise um Lagen aus Filterpapier oder Vliesstoff. Die verschiedenen Lagen erfüllen unterschiedliche Anforderungen. Neben den Lagen, die für die Abscheideleistung zuständig sind, können auch Lagen vorhanden sein, die die Standzeit (Staubspeicherkapazität) des Filterbeutels erhöhen, sowie Lagen, die eine Schutzfunktion erfüllen (beispielsweise Prallschutz).

Verschiedene mögliche Filterstrukturaufbauten sind beispielsweise in der EP 0 960 645 beschrieben, bei denen in Luftströmungsrichtung eine Grobfilterlage vor einer Feinfilterlage angeordnet ist, so dass größere Partikel von der Grobfilterlage aufgehalten und kleinere Partikel in der Feinfilterlage eingelagert werden können. Die bisher eingesetzten Schutz- und Verstärkungslagen sind zwar in der Lage, dem Beutel die gewünschte Berstfestigkeit zu verleihen oder auch empfindliche Filterlagen vor Abrasion durch die auftreffenden Partikel zu schützen, haben aber auch Nachteile. Die Luftdurchlässigkeit und damit die maximale Saugleistung des Staubsaugers wird reduziert. Um empfindliche Lagen des Beutelmaterials (z. B. eine Meltblownlage) zu schützen, müssen relativ dichte Schutzlagen eingesetzt werden, die selber dazu neigen, durch Hausstaub zu verstopfen. Einige der klassischerweise eingesetzten Verstärkungs- oder Schutzlagen wie Papier sind nicht schweißbar und eignen sich daher nicht für die Verwendung in modernen Kunststoffvliesbeuteln.

Aus der DE 202 09 923 ist ein Staubfilterbeutel bekannt, der eine gelochte Innenlage in Form einer perforierten Folie oder eines Netzes aufweist. Diese gelochte Innenlage dient dazu, nachfolgende Filterlagen vor scharfkantigen Partikeln zu schützen, die im Querschnitt größer als 100 µm sind. Zu diesem Zweck haben die Perforationen der Innenlage einen Durchmesser von 100 µm.

Ein Filtermaterial mit einer luftdurchlässigen Kunststofffolie ist aus der EP 1 795 248 bekannt, wobei die Kunststofffolie die Funktion einer Stützschicht erfüllt und eine geringe Luftdurchlässigkeit von beispielsweise 1200 l/(m² s) aufweist. Ein Staubbeutel mit einer Zwischenlage zwischen zwei Filterlagen (beispielsweise einem Filterpapier oder einem Nonwoven) ist aus der DE 201 10 838 bekannt, wobei die Zwischenlage dazu dient, eine Separierung der Filterlagen herzustellen, so dass die Filterlagen gegeneinander verschiebbar sind.

Angesichts des Stands der Technik besteht die Aufgabe der vorliegenden Erfindung darin, einen Staubsaugerfilterbeutel bereitzustellen, der eine hohe mechanische Stabilität aufweist, ohne gleichzeitig eine hohe; die Standzeit verringernde Verstopfungsneigung zu haben.

Diese Aufgabe wird gelöst durch einen Staubsaugerfilterbeutel gemäß Anspruch 1.

Erfindungsgemäß wird somit ein Staubsaugerfilterbeutel mit einem Filtermedium umfassend eine erste Lage aus einem Netz mit einer Luftdurchlässigkeit von wenigstens 10000 l/(m²s) und eine erste Faserlage aus Chemiefasern und/oder pflanzlichen Fasern, die mit einer Seite der ersten Lage verbunden ist, bereitgestellt.

Es hat sich überraschenderweise herausgestellt, dass ein Staubsaugerfilterbeutel mit einem Filtermedium, das einen Verbund aus einer solchen ersten Lage mit einer derartigen Luftdurchlässigkeit und einer solchen ersten Faserlage umfasst, in vorteilhafter Weise eine hohe mechanische Stabilität bei geringer Verstopfungsneigung gegenüber Hausstaub zeigt.

Bei den Chemiefasern (Kunstfasern) kann es sich um Stapelfasern oder Endlosfasern, manchmal auch als Filamente bezeichnet, handeln. Bei den pflanzlichen Fasern (Naturfasern) kann es sich beispielsweise um Zellstofffasern, insbesondere Bambuszellstofffasern, handeln.

Bei dem Staubsaugerfilterbeutel kann es sich um einen Wegwerfbeutel handeln. Der Staubsaugerfilterbeutel kann insbesondere in Form eines Flachbeutels ausgebildet sein.

Das Netz ist ein extrudiertes Netz.

Die erste Faserlage kann insbesondere vollflächig, beispielsweise mittels Kalandrierens, mit der ersten Lage verbunden sein. Damit sind die beiden Lagen nicht gegeneinander verschiebbar. Vollflächig bedeutet in diesem Zusammenhang nicht, dass alle Fasern miteinander vollständig verbunden, beispielsweise verschmolzen, sind, wodurch sich ein Film ergäbe. Es bedeutet vielmehr, dass die Lagen an einer Vielzahl von diskreten Stellen miteinander verbunden sind, wobei diese Stellen gleichmäßig über die gesamte Fläche der Lagen verteilt sind. Die Stellen können vorherbestimmt sein, beispielsweise im Falle eines Punkt- bzw. Gravurkalanders, oder nicht vorherbestimmt sein, beispielsweise im Falle von Hotmeltpulver und einem Bandkalander.

Die erste Lage weist ein Flächengewicht von 5 bis 30 g/m², insbesondere 7 bis 20 g/m², und eine Dicke von 0,1 bis 1 mm, insbesondere 0,15 bis 0,8 mm, auf. Dies erlaubt eine ausreichende Flexibilität bei hoher Festigkeit.

Die erste Lage kann eine mittlere Lochquerschnittsfläche von 2 bis 900 mm², insbesondere von 5 bis 30 mm², und/oder eine Luftdurchlässigkeit von wenigstens 11000 l/(m² s), insbesondere von wenigstens 13000 l/(m² s), insbesondere von wenigstens 15000 l/(m² s), aufweisen.

Die erste Lage ist ein Netz mit einer Maschenweite von 2 mm bis 30 mm. Die Maschenweite kann unterschiedlichen Richtungen, beispielsweise in x- und y-Richtung bzw. in Maschinenrichtung und quer zur Maschinenrichtung, verschieden oder gleich sein. Bei dem Netz kann es sich um ein rechteckiges, insbesondere quadratisches, Netz handeln. Die Maschenweite kann insbesondere zwischen 2 x 2 mm und 30 x 30 mm liegen.

Die erste Faserlage der beschriebenen Filtermedien kann Fasern mit einer Feinheit von wenigstens 5 dtex, insbesondere von wenigstens 10 dtex, aufweisen. Die erste Faserlage kann insbesondere aus solchen Fasern bestehen.

Die oben genannten Parameter können insbesondere an die Größe oder den Einsatzzweck des Staubsaugerfilterbeutels angepasst sein. So kann für die erste Lage beispielsweise ein Flächengewicht von weniger als 15 g/m², eine Dicke von weniger als 0,5 mm und/oder eine Maschenweite von weniger als 5 mm gegebenenfalls besonders geeignet sein. Dies gilt beispielsweise für den Fall von Haushaltsstaubsaugern mit verhältnismäßig kleinen Beuteln (Volumen zwischen 2 und 5 I). Für gewerblich eingesetzte Staubsaugerbeutel können ein höheres Flächengewicht und/oder höhere Maschenweiten gegebenenfalls von Vorteil sein.

Die zuvor beschriebenen Filtermedien können eine zweite Faserlage aus Chemiefasern und/oder pflanzlichen Fasern umfassen, die mit der ersten Lage an der der ersten Faserlage abgewandten Seite verbunden ist. Die zweite Faserlage kann insbesondere mit der ersten Faserlage verbunden sein; dabei können insbesondere Fasern der ersten Faserlage mit Fasern der zweiten Faserlage verbunden sein. Insbesondere können Fasern der ersten Faserlage in den Löchern, Maschen bzw. Poren der ersten Lage mit Fasern der zweiten Faserlage verbunden sein. Die erste Faserlage, zweite Faserlage und/oder erste Lage können derart miteinander verbunden sein, dass sie nicht gegeneinander bewegbar, insbesondere verschiebbar sind.

Die zweite Faserlage kann ebenfalls die Eigenschaften und Parameter aufweisen, wie sie für die erste Faserlage beschrieben sind. Die zweite Faserlage kann beispielsweise Fasern mit einer Feinheit von wenigstens 5 dtex, insbesondere von wenigstens 10 dtex, umfassen. Die Eigenschaften und Parameter der zweiten Faserlage können jedoch unabhängig von denen der ersten Faserlage gewählt werden. Die beiden Faserlagen können allerdings auch gleich ausgebildet sein.

Die erste und/oder die zweite Faserlage in den zuvor beschriebenen Filtermedien können thermisch, insbesondere mittels Kalandrierens, und/oder mittels eines Klebemittels mit der ersten Lage und/oder der jeweils anderen Faserlage verbunden sein. Das Kalandrieren kann punktförmig (beispielsweise mittels eines Gravurkalanders) erfolgen. Bei dem Klebemittel kann es sich beispielsweise um Hotmelt, insbesondere Hotmeltpulver, handeln. Auch andere Verbindungsverfahren sind grundsätzlich möglich.

Die erste Lage ist in Form einer Vlieslage oder einer Vliesstofflage ausgebildet. Die zweite Faserlage kann, insbesondere vor einem Verbinden mit der ersten Lage, in Form einer Vlieslage oder einer Vliesstofflage ausgebildet sein.

Der Begriff Vliesstoff ("Nonwoven") wird gemäß der Definition nach ISO Standard ISO 9092: 1988 bzw. CEN Standard EN 29092 verwendet. Ein Vliesstoff kann insbesondere trocken- oder nassgelegt oder ein Extrusionsvliesstoff, insbesondere ein Meltblown (schmelzgesponnener Mikrofaservliesstoff) oder Spunbond (Filamentspinnvliesstoff), sein. Die Abgrenzung zwischen nassgelegten Vliesstoffen beziehungsweise Nonwoven und herkömmlichem nassgelegtem Papier erfolgt gemäß der oben genannten Definition, wie sie auch von der International Association Serving the Nonwovens and Related Industries EDANA (www.edana.org) verwendet wird. Wenn also hier von Papier oder Filterpapier die Rede ist, ist damit (herkömmliches) nassgelegtes Papier gemeint, das in der oben genannten Definition von Vliesstoff ausgenommen ist. Unter einem Vlies ("Web") wird einen Lage von noch losen, d. h. unverbundenen, Fasern verstanden. Durch Verfestigen der losen Fasern kann dann ein Vliesstoff erhalten werden.

Somit können beispielsweise lose Fasern (z. B. Stapelfasern) auf einem Netz, einer gelochten Folie oder einem gelochten Vliesstoff abgelegt werden und dann damit, beispielsweise mittels Kalandrierens, verbunden werden. Die thermische Verbindung erfolgt beispielsweise entweder dadurch, dass das Netz Bikomponentenmaterial umfasst oder die Stapelfasern Bikomponentenfasern umfassen, oder indem z. B. Hotmelt zur Verbindung aufgesprüht oder Hotmeltpulver auf- oder eingestreut wird, das insbesondere durch Kalandrieren aktiviert werden kann. Eine separate Verfestigung der Vlieslage ist dabei nicht erforderlich. Die Faserlage muss somit keine eigenständige und stabile Filterlage bilden; erst in Kombination oder im Verbund mit der ersten Lage (Netz, gelochte Folie oder gelochter Vliesstoff) wird die erforderliche Stabilität erhalten.

Es können insbesondere die erste und/oder die zweite Faserlage in Form einer, insbesondere kardierten, Vlieslage oder Vliesstofflage aus Stapelfasern ausgebildet sein. Fasern der ersten und/oder zweiten Faserlage können in die Löcher oder Poren der ersten Lage ragen.

Die erste und/oder zweite Faserlage können jeweils eine trockengelegte oder nassgelegte Vlieslage oder Vliesstofflage, eine Extrusionsvlieslage oder eine Extrusionsvliesstofflage sein.

Als Materialien für Fasern der Faserlagen und/oder für die erste Lage kommen grundsätzlich verschiedenste Kunststoffe in Frage; auch natürliche Fasern, beispielsweise Zellstofffasern, können verwendet werden. Mögliche Materialien sind beispielsweise Polypropylen oder Polyester. Weiterhin können die erste Lage und/oder Fasern der ersten und/oder zweiten Faserlage eine Bikomponentenstruktur aufweisen. Die Verwendung von Bikomponentenfasern in der ersten Faserlage oder beispielsweise von einem Bikomponentennetz, d.h. einem Netz, dessen Fasern einen Bikomponentenaufbau aufweisen, ermöglicht insbesondere eine einfache thermische Verbindung der ersten Lage und der ersten Faserlage.

Die erste Faserlage und/oder die zweite Faserlage können eine Flächengewicht von 5 bis 50 g/m², insbesondere von 10 bis 20 g/m² aufweisen. Aufgrund des Netzes können somit Faserlagen mit geringem Flächengewicht verwendet werden, die durch das Netz mit hoher Luftdurchlässigkeit und geringer Verstopfungsneigung ausreichend stabilisiert werden. Bei Vorhandensein einer ersten und einer zweiten Faserlage kann die Summe der Flächengewichte der ersten und zweiten Faserlage zwischen 10 und 50 g/m² liegen.

Die zuvor beschriebenen Filtermedien können eine dritte Faserlage aus Chemiefasern und/oder pflanzlichen Fasern in Form einer Vlieslage oder einer Vliesstofflage umfassen, die an der ersten Faserlage auf der der ersten Lage abgewandten Seite angeordnet ist. Durch eine geeignete Wahl der Filterparameter der verschiedenen Lagen lassen sich somit die gewünschten Filtereigenschaften einstellen.

Die zuvor beschriebenen Filtermedien können eine vierte Faserlage aus Chemiefasern und/oder pflanzlichen Fasern in Form einer Vlieslage oder einer Vliesstofflage umfassen, die an der dritten Faserlage auf der der ersten Faserlage abgewandten Seite angeordnet ist.

Die erste, zweite, dritte und/oder vierte Faserlage können jeweils eine trockengelegte oder nassgelegte Vlieslage oder Vliesstofflage, eine Extrusionsvlieslage oder eine Extrusionsvliesstofflage sein, wie sie beispielsweise zuvor beschrieben wurden. Die erste, zweite, dritte und/oder vierte Faserlage können jedoch unterschiedlich ausgebildet sein. Die dritte Faserlage kann beispielsweise in Form einer kardierten Vlieslage ausgebildet sein. Beispielsweise kann die erste Faserlage in Form einer kardierten Vlieslage und die dritte Faserlage in Form einer kardierten, elektrostatisch geladenen Vlieslage ausgebildet sein. Die vierte Lage kann beispielsweise in Form einer Extrusionsvlieslage oder einer Extrusionsvliesstofflage ausgebildet sein. Es kann sich insbesondere um eine Meltblownlage handeln.

Der Verbund aus erster Lage und erster Faserlage weist eine Luftdurchlässigkeit von 1.000 bis 12.000 l/(m² s) auf. Der Verbund aus erster Lage, erster Faserlage und zweiter Faserlage der zuvor beschriebenen Filtermedien kann eine Luftdurchlässigkeit von 1000 bis 12000 l/(m²s), insbesondere 4000 bis 10000 l/(m² s), aufweisen. Mit einer derartigen Luftdurchlässigkeit kann insbesondere eine hohe Saugleistung über die Betriebsdauer gewährleistet werden.

Das Filtermedium kann an der am weitesten stromaufwärts liegenden Stelle der Beutelwand des Staubsaugerfilterbeutels angeordnet sein. Die erste Lage oder die erste Faserlage bilden die innerste Lage der Beutelwand des Staubsaugerfilterbeutels. In diesem Fall ist dann die erste Lage oder die erste Faserlage die bezüglich des Luftstroms am weitesten stromaufwärts angeordnete Lage des Staubsaugerfilterbeutels. Insbesondere wenn die beschriebenen Filtermedien in Form dieses Verbundes an innerster Stelle liegen, weist der Filterbeutel eine geringe Verstopfungsneigung gegenüber Hausstaub und einen geringen Strömungswiderstand auf. Nachfolgende Filterlagen können damit außerdem eine geringe Eigenstabilität aufweisen, ohne dass sie durch den Saugluftstrom zerstört werden. Das Filtermedium kann sich insbesondere über die gesamte Fläche der Beutelwand erstrecken.

Die Erfindung stellt gemäß Anspruch 12 weiterhin einen Staubsaugerfilterbeutel erhältlich durch ein bestimmtes Verfahren zum Herstellen eines Filtermediums für einen Staubsaugerfilterbeutel bereit.

Mit dem in Anspruch genannten Verfahren kann insbesondere eines der zuvor beschriebenen Filtermedien und damit auch einer der zuvor beschriebenen Staubsaugerfilterbeutel hergestellt werden.

Das Verbinden kann insbesondere vollflächig erfolgen. Der Schritt des Verbindens kann thermisch erfolgen. Es kann grundsätzlich punktförmig oder flächig erfolgen. Insbesondere kann es mittels eines Gravurkalanders erfolgen. Selbst wenn dabei das Netz, die Folie oder Vliesstoff aufgrund des Punktkalanders an einzelnen Stellen deformiert würde, so sorgen das Netz, die Folie oder der Vliesstoff trotzdem noch für die Stabilität des Verbundes des ersten Filtermediums. Der Schritt des Verbindens kann somit eine Führen durch einen Gravurkalander umfassen. Der Gravurkalander kann insbesondere einen Pressflächenanteil von 10 bis 35 %, eine Figurendichte von 30 - 70 Figuren/cm² und/oder eine Pressfläche von 0,2 bis 0,9 mm²/Figur aufweisen.

Die Schritte des Bereitstellens können durch ein Ablegen der ersten Lage auf der ersten Faserlage oder durch ein Ablegen der ersten Faserlage auf der ersten Lage erfolgen.

Die erste Lage und/oder die erste Faserlage können die oben im Zusammenhang mit dem Filtermedium beschriebenen Eigenschaften und Parameter aufweisen. Beispielweise kann das Netz ein extrudiertes Netz oder ein gewebtes Netz sein.

Bei dem genannten Verfahren wird die erste Lage mit einem Flächengewicht von 5 bis 30 g/m² und einer Dicke von 0,1 bis 1 mm bereitgestellt.

Die erste Lage kann mit einer mittleren Lochquerschnittsfläche von 2 bis 900 mm² bereitgestellt werden. Sie kann mit einer Luftdurchlässigkeit von wenigstens 11000 l/(m²s), insbesondere von wenigstens 13000 l/(m²s), insbesondere von wenigstens 15000 l/(m²s), bereitgestellt werden. Die erste Faserlage kann Fasern mit einer Feinheit von wenigstens 5 dtex, insbesondere von wenigstens 10 dtex, aufweisen. Die erste Lage kann ein Netz mit einer Maschenweite von 2 mm bis 30 mm sein.

Die zuvor beschriebenen Verfahren können weiterhin ein Bereitstellen einer zweiten Faserlage aus Chemiefasern und/oder pflanzlichen Fasern umfassen. Insbesondere kann die zweite Faserlage auf der der ersten Faserlage abgewandten Seite der ersten Lage bereitgestellt werden. Der Schritt des Verbindens kann ein Verbinden der zweiten Faserlage mit der ersten Lage, insbesondere an der der ersten Faserlage abgewandten Seite, umfassen. Insbesondere können beide Faserlagen gleichzeitig mit der ersten Lage und/oder miteinander verbunden werden. Dies bedeutet, dass das Bereitstellen der beiden Faserlagen und der ersten Lage vor dem Schritt des Verbindens erfolgen kann.

Bei den genannten Verfahren kann der Schritt des Verbindens thermisch, insbesondere mittels Kalandrierens, und/oder mittels eines Klebemittels erfolgen. Die thermische Verbindung erfolgt beispielsweise entweder dadurch, dass das Netz Bikomponentenmaterial umfasst oder die Stapelfasern Bikomponentenfasern umfassen, und/oder indem z. B.

Hotmelt zur Verbindung aufgesprüht oder Hotmeltpulver auf- oder eingestreut wird. Auch andere Verbindungsverfahren sind möglich.

Die zweite Faserlage kann die oben im Zusammenhang mit dem Filtermedium beschriebenen Eigenschaften und Parameter aufweisen. Die erste und/oder zweite Faserlage können jeweils eine trockengelegte oder nassgelegte Vlieslage oder Vliesstofflage, eine Extrusionsvlieslage oder eine Extrusionsvliesstofflage sein. Bei der ersten und/oder zweiten Faserlage kann es sich insbesondere um eine, insbesondere kardierte, Stapelfaserlage handeln.

Für die Faserlagen und die erste Lage können ebenfalls, wie bereits oben beschrieben, Materialien mit den genannten Materialparametern verwendet werden.

Die Erfindung stellt auch ein Filtermedium erhältlich durch die zuvor beschriebenen Verfahren bereit.

Die Erfindung stellt weiterhin ein Verfahren zum Herstellen eines Staubsaugerfilterbeutels bereits, umfassend ein Herstellen eines Filtermediums gemäß einem der zuvor beschriebenen Verfahren und ein Konfektionieren des Filtermediums zu einem Staubsaugerfilterbeutel.

Vor dem Konfektionieren kann noch ein Bereitstellen wenigstens einer weiteren Filterlage erfolgen. Dann kann noch ein Schritt eines Verbindens der wenigstens einen weiteren Filterlage mit dem Filtermedium vor dem Konfektionieren erfolgen.

Die Erfindung stellt außerdem einen Staubsaugerfilterbeutel erhältlich durch die zuvor beschriebenen Verfahren bereit.

Nachfolgend wird die Erfindung anhand von Beispielen und der Figuren näher beschrieben. Dabei zeigt
Fig. 1 schematisch den Aufbau eines ersten beispielhaften Filtermediums;
Fig. 2 schematisch einen zweiten Aufbau eines beispielhaften Filtermediums;
Fig. 3 schematisch den Aufbau eines dritten beispielhaften Filtermediums.

Für die Bestimmung der verschiedenen Parameter werden die folgenden Verfahren verwendet. Die Luftdurchlässigkeit wird gemäß DIN EN ISO 9237: 1995-12 bestimmt. Eingesetzt wurde das Luftdurchlässigkeits-Prüfgerät FX3300 der Texttest AG. Es wurde insbesondere mit einem Differenzdruck von 200 Pa und einer Prüffläche von 25 cm² gearbeitet.

Das Flächengewicht wird gemäß DIN EN 29073-1: 1992-08 bestimmt. Für die Bestimmung der Dicke wird das Verfahren gemäß Norm DIN EN ISO 9073-2: 1997-02 eingesetzt, wobei für ein extrudiertes Netz das Verfahren A verwendet wird.

Die mittlere Lochquerschnittsfläche wird optisch, beispielsweise mittels eines Messmikroskop oder Bildanalyse, bestimmt, wobei über wenigstens 100 Löcher, Maschen bzw. Poren gemittelt wird und für jedes Loch die geringste Querschnittsfläche parallel zur Grundfläche herangezogen wird.

Die Maschenweite wird gemäß DIN ISO 9044 als Abstand zwischen zwei benachbarten Stegen oder Fäden in der Projektionsebenen und in der Mitte der Masche bestimmt.

Zur Feinheitsbestimmung wurde DIN EN ISO 1973: 1995-12 herangezogen.

Sofern nichts anderes gesagt, werden die oben genannten Verfahren auch zur Bestimmung der entsprechenden Parameter von extrudierten Netzen verwendet.

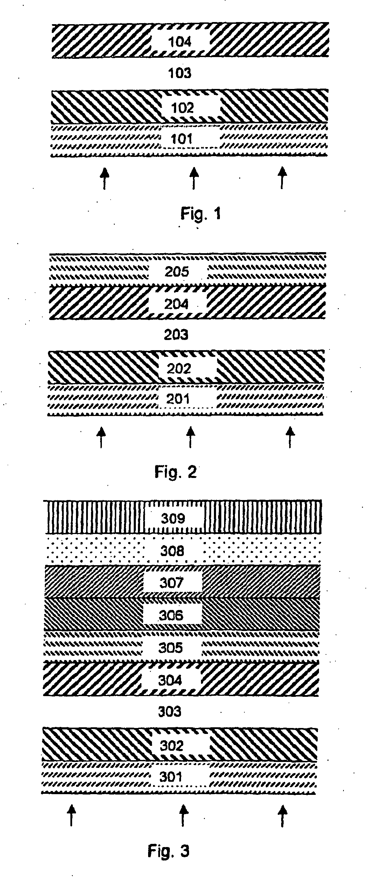

Fig. 1 zeigt schematisch den Aufbau eines beispielhaften Filtermediums. Eine erste Lage 101 ist in Form eines extrudierten Netzes vorgesehen. Ein derartiges extrudiertes Netz kann beispielsweise gemäß der DE 35 08 941 hergestellt werden.

Alternativ können beispielsweise von der Firma Conwed die Netze R03650, R05340 oder Thermanet R03434 verwendet werden. So weist beispielsweise das Netz R03650 eine Luftdurchlässigkeit von größer als 15000 l/(m²s), ein Flächengewicht von 10,54 g/m², eine Maschenweite von 4,2 x 4,2 mm und eine Dicke von 0,3 mm auf.

Mit dieser ersten Lage wird eine Faserlage 102 verbunden. Diese Faserlage kann insbesondere lose Stapelfasern oder Filamente umfassen oder aus diesen bestehen; sie können beispielsweise in Form eines kardierten Vlieses vorgesehen werden. Mögliche Fasern sind beispielsweise Monokomponentenfasern aus Polypropylen oder Polyester oder auch Bikomponentenfasem, deren Hülle einen niedrigeren Schmelzpunkt als der Kern der Faser aufweist. Die Lage 102 kann alternativ oder zusätzlich auch Zellstofffasern umfassen. Alternativ oder zusätzlich kann die erste Faserlage Spaltfasern ("split film fibers") umfassen, die insbesondere elektrostatisch geladen sein können. Alternativ oder zusätzlich kann die erste Faserlage 102 gemischte elektrostatische Fasern umfassen, wobei es sich dabei um Fasern mit verschiedenen triboelektrischen Eigenschaften handelt, die aufgrund von Reibung mit einer Ladung versehen werden können, wie beispielsweise in US 5 470 485 oder in EP 0 246 811 beschrieben ist. Insbesondere kann die erste Faserlage eine Mischung von zuvor genannten Fasern umfassen.

Bei der Herstellung eines Filtermediums gemäß Fig. 1 kann beispielsweise zunächst die erste Lage 101 abgelegt werden, wonach ein Ablegen der ersten Faserlage 102 auf der ersten Lage 101 erfolgt. Alternativ kann auch zuerst die erste Faserlage 102 abgelegt werden, auf der dann die erste Lage 101 abgelegt wird.

Ein Verbinden der ersten Lage 101 und der ersten Faserlage 102 kann auf verschiedene Arten erfolgen, wobei dieses Verbinden grundsätzlich unabhängig von den übrigen Lagen des Filtermediums sein kann. Beispielsweise können die beiden Lagen thermisch, insbesondere mittels Kalandrierens, verbunden werden. Hierfür weist zumindest eine der beiden Lagen eine thermoplastische Komponente auf. Das Kalandrieren kann insbesondere punktförmig (mit einer gravierten Walze) durchgeführt werden. Durch das Kalandrieren werden zumindest einige der Fasern der ersten Faserlage mit der ersten Lage verbunden.

Beispielsweise kann die erste Faserlage 102 in Form von losen Stapelfasern (Vlieslage) abgelegt werden. Auf diese lose Faserlage wird die erste Lage 101 (ein Netz) abgelegt. Anschließend werden die erste Lage und die erste Faserlage durch einen Gravurkalander geführt, wodurch die Fasern der ersten Faserlage untereinander und mit der ersten Lage thermisch verbunden werden. Dabei ragen insbesondere Fasern der ersten Faserlage in die Poren oder Löcher der ersten Lage, so dass es sich bei dem Filtermedium um einen Verbund oder ein Laminat handelt. Die Faserlage 102 alleine würde nicht die nötige Stabilität aufweisen, um als Filterlage eingesetzt zu werden.

Gemäß einer Variante kann beispielsweise zuerst die erste Faserlage 102 abgelegt werden und dann mit einem Klebstoff, beispielsweise Hotmelt, besprüht werden. Danach wird die erste Lage 101 abgelegt und beispielsweise mittels eines Bandkalanders mit der ersten Faserlage 102 verbunden.

Nach weiteren Alternativen kann die Verbindung auch mittels Ultraschallschweißens oder Wasserstrahlverwirbelung erfolgen, wie beispielsweise in W. Albrecht et al., "Vliesstoffe", Wiley-VCH (2000) beschrieben.

Als zweite Faserlage 103 kann beispielsweise eine Meltblownlage folgen. Die dritte Faserlage 103 ist mit der ersten Faserlage 102 an der der ersten Lage 101 abgewandten Seite verbunden. Diese Verbindung kann beispielsweise thermisch (insbesondere durch punktförmiges Kalandrieren) erfolgen.

Eine weitere Faserlage 104 kann zusätzlich vorgesehen sein. Diese Faserlage kann beispielsweise eine Spunbondlage sein. Auch die Faserlage 104 kann beispielsweise thermisch oder durch Ultraschallschweißen mit den übrigen Lagen verbunden sein.

Wenn aus dem Filtermedium gemäß Fig. 1 ein Staubsaugerfilterbeutel konfektioniert wird, so wird die erste Lage 101 vorzugsweise als innerste Lage des Staubsaugerfilterbeutels angeordnet, so dass dann die Faserlage 104 die äußere Schutzschicht bildet.

Damit ist die erste Lage 101 bezüglich des Luftstroms im Betrieb am weitesten stromaufwärts angeordnet, was durch die Pfeile in Fig. 1 illustriert wird. Alternativ können die Lagen 101 und 102 jedoch auch vertauscht werden, so dass dann die erste Faserlage 102 im konfektionierten Staubsaugerbeutel die innerste Lage bilden würde, gefolgt von der ersten Lage 101.

Für die Beutelwand eines Staubsaugerfilterbeutels werden dem in Figur 1 gezeigten Filtermedium vorzugsweise noch weitere Materiallagen hinzugefügt, wie sie beispielhaft in Figuren 2 und 3 gezeigt sind.

Fig. 2 illustriert schematisch ein weiteres Beispiel eines Filtermediumaufbaus. In dem gezeigten Beispiel ist die erste Lage 202, bei der es sich beispielsweise um ein extrudiertes Netz handeln kann, auf beiden Seiten mit einer zweiten Faserlage 201 und einer ersten Faserlage 203 verbunden. Bei der Herstellung kann beispielsweise zunächst die eine der beiden Faserlagen, dann die erste Lage 202 und schließlich die andere Faserlage abgelegt werden. Bei den Faserlagen kann es sich insbesondere um kardierte Vliese handeln, die jedoch unterschiedliche Fasern bzw. unterschiedliche Parameter (wie Flächengewicht und Dicke) aufweisen können. Alternativ können die beiden Faserlagen jedoch auch gleich sein. Nach dem Ablegen dieser drei Lagen kann dann beispielsweise eine Verbindung mittels eines Gravurkalanders erfolgen, so dass beide Faserlagen mit der dazwischen liegenden ersten Lage verbunden werden.

Als nächstes folgt eine dritte Faserlage 204, bei der es sich insbesondere um eine Meltblownlage handeln kann. Diese Meltblownlage kann analog zu dem Beispiel in Fig. 1 ausgebildet sein. Die äußerste Lage 205 wird in dem gezeigten Beispiel durch ein extrudiertes Netz oder eine gelochte Folie gebildet und erfüllt in erster Linie eine Schutzfunktion. Die Parameter dieser äußersten Lage können, aber müssen nicht, den der ersten Lage 202 entsprechen.

Die in Figur 2 und 3 gezeigten Filtermedien sind geeignet, die Beutelwand eines Staubsaugerfilterbeutels zu bilden.

In Fig. 3 ist schematisch ein weiteres Ausführungsbeispiel eines Filtermediums illustriert. Bei dem gezeigten Aufbau sind stromaufwärts beide Seiten eines extrudierten Netzes 302 mit einer kardierten Vlieslage 301 und 303 versehen. In einem Staubsaugerfilterbeutel wird die kardierte Vlieslage 301 die Innenlage bilden. Die kardierten Vlieslagen 301 und 303 werden durch punktförmiges Kalandrieren (beispielsweise mit einem Ultraschallkalander) mit dem extrudierten Netz 302 verbunden.

Die Vlieslage 304 besteht aus elektrostatisch geladenen Stapelfasern. Diese Vlieslage wird auf der kardierten Lage 303 abgelegt, gefolgt von zwei Meltblownlagen 305 und 306. Die Lagen 303, 304 und 305 werden ebenfalls mittels eines Ultraschallkalanders miteinander und den ersten drei Lagen verbunden. Stromabwärts angeordnet folgt ein Laminat aus einem extrudierten Netz 308, das auf beiden Seiten eine kardierte Stapelfaserlage 307 bzw. 309 aufweist. Im Vergleich mit den kardierten Stapelfaserlagen 301 und 303 weisen die Stapelfasern der Lagen 307 und 309 jedoch geringere Feinheitswerte auf. Das Laminat kann gemäß dem nachfolgenden Beispiel erhalten werden.

Gemäß einem weiteren Beispiel kann ein Filtermedium als Verbund oder Laminat aus drei Lagen bestehen. Dabei sind zwei Faserlagen jeweils an einer Seite einer ersten Lage in Form eines Netzes angeordnet, so dass das Netz zwischen den beiden Faserlagen angeordnet ist. Bei den Faserlagen handelt es sich um kardierte Vlieslagen aus Stapelfasern. Bei der Herstellung wird das Netz zwischen den beiden Faserlagen aus losen Stapelfasern (beispielsweise aus Polypropylen) abgelegt. Danach wird ein Hotmeltpulver aufgebracht bzw. in die Faserlagen eingebracht. Dies kann beispielsweise durch ein Aufstreuen auf die drei aufeinandergelegten Lagen und anschließendes Rütteln erfolgen, so dass das Pulver einsinkt.

Dann werden die drei Lagen durch einen Bandkalander geführt, so dass durch den Hotmelt eine Klebeverbindung entsteht. Dabei werden Fasern in den jeweiligen Faserlagen, Fasern der beiden Faserlagen mit dem Netz und Fasern einer Faserlage mit Fasern der anderen Faserlage verbunden. Letzteres erfolgt durch die Löcher oder Poren des Netzes hindurch; die Fasern der Faserlagen ragen also in die Maschen des Netzes und werden darin miteinander verbunden. Auf diese Weise wird ein sehr stabiler Verbund erreicht, dessen Lagen gegeneinander nicht verschiebbar sind, wobei die beiden Faserlagen für sich gesehen keine ausreichende Stabilität besitzen, um als eigenständige Filterlagen eingesetzt zu werden.

Es versteht sich, dass die zuvor beispielhaft aufgeführten Lagen auch in anderer Art und Weise angeordnet und gegebenenfalls miteinander verbunden werden können. Weiterhin versteht es sich, dass in den Figuren weder die gezeigten Lagen in einer realistischen Dimensionierung noch die mikroskopische Anordnung der Fasern der verschiedenen Lagen wiedergegeben ist.

## Patentansprüche

1. Staubsaugerfilterbeutel mit einem Filtermedium umfassend:
eine erste Lage aus einem Netz mit einer Luftdurchlässigkeit von wenigstens 10000 l/(m²s),
eine erste Faserlage aus Chemiefasern und/oder pflanzlichen Fasern, die mit einer Seite der ersten Lage verbunden ist,
wobei die erste Lage ein Flächengewicht von 5 bis 30 g/m² und eine Dicke von 0,1 bis 1 mm aufweist,
wobei die erste Lage ein Netz mit einer Maschenweite von 2 mm bis 30 mm ist,
wobei die erste Faserlage in Form einer Vlieslage oder einer Vliesstofflage ausgebildet ist,
wobei die erste Lage oder die erste Faserlage die innerste Lage der Beutelwand bildet,
wobei der Verbund aus erster Lage und erster Faserlage eine Luftdurchlässigkeit von 1000 bis 12000 l/(m²s) aufweist,
wobei das Netz ein extrudiertes Netz ist.

2. Staubsaugerfilterbeutel nach Anspruch 1, wobei die erste Lage ein Flächengewicht von 7 bis 20 g/m² und/oder eine Dicke von 0,15 bis 0,8 mm aufweist.

3. Staubsaugerfilterbeutel nach einem der vorangegangenen Ansprüche, wobei die erste Lage eine mittlere Lochquerschnittsfläche von 2 bis 900 mm², insbesondere 5 bis 30 mm², und/oder eine Luftdurchlässigkeit von wenigstens 11000 l/(m²s), insbesondere von wenigstens 13000 l/(m²s), aufweist.

4. Staubsaugerfilterbeutel nach einem der vorangegangenen Ansprüche, wobei die erste Faserlage Fasern mit einer Feinheit von wenigstens 5 dtex, insbesondere von wenigstens 10 dtex, aufweist.

5. Staubsaugerfilterbeutel nach einem der vorangegangenen Ansprüche, wobei das Filtermedium eine zweite Faserlage aus Chemiefasern und/oder pflanzlichen Fasern, die mit der ersten Lage an der der ersten Faserlage abgewandten Seite verbunden ist, umfasst.

6. Staubsaugerfilterbeutel nach einem der vorangegangenen Ansprüche, wobei die erste und/oder die zweite Faserlage thermisch, insbesondere mittels Kalandrierens, und/oder mittels eines Klebemittels mit der ersten Lage verbunden ist.

7. Staubsaugerfilterbeutel nach Anspruch 5 oder 6, wobei die zweite Faserlage in Form einer Vlieslage oder einer Vliesstofflage ausgebildet ist.

8. Staubsaugerfilterbeutel nach einem der vorangegangenen Ansprüche, wobei die erste und/oder die zweite Faserlage in Form einer Vlieslage oder Vliesstofflage aus Stapelfasern ausgebildet ist.

9. Staubsaugerfilterbeutel nach einem der vorangegangenen Ansprüche, wobei die erste und/oder zweite Faserlage jeweils eine trockengelegte oder nassgelegte Vlieslage oder Vliesstofflage, eine Extrusionsvlieslage oder eine Extrusionsvliesstofflage ist.

10. Staubsaugerfilterbeutel nach einem der vorangegangenen Ansprüche, wobei die erste Faserlage und/oder die zweite Faserlage ein Flächengewicht von 5 bis 50 g/m², insbesondere von 10 bis 20 g/m² aufweist.

11. Staubsaugerfilterbeutel nach einem der vorangegangenen Ansprüche, wobei der Verbund aus erster Lage und erster Faserlage eine Luftdurchlässigkeit von 4000 bis 10000 l/(m²s) oder wobei der Verbund aus erster Lage, erster Faserlage und zweiter Faserlage eine Luftdurchlässigkeit von 1000 bis 12000 l/(m²s), insbesondere 4000 bis 10000 l/(m²s), aufweist.

12. Staubsaugerfilterbeutel erhältlich durch ein Verfahren zum Herstellen eines Filtermediums für einen Staubsaugerfilterbeutel mit den Schritten:
Bereitstellen einer ersten Lage aus einem Netz mit einer Luftdurchlässigkeit von wenigstens 10000 l/(m²s),
Bereitstellen einer ersten Faserlage aus Chemiefasern und/oder pflanzlichen Fasern auf einer Seite der ersten Lage,
Verbinden der ersten Lage mit der ersten Faserlage,
wobei die erste Lage ein Flächengewicht von 5 bis 30 g/m² und eine Dicke von 0,1 bis 1 mm aufweist,
wobei die erste Lage ein Netz mit einer Maschenweite von 2 mm bis 30 mm ist,
wobei die erste Faserlage in Form einer Vlieslage oder einer Vliesstofflage ausgebildet ist,
wobei die erste Lage oder die erste Faserlage die innerste Lage der Beutelwand bildet,
wobei das Netz ein extrudiertes Netz ist.

13. Staubsaugerfilterbeutel nach Anspruch 12, wobei der Schritt des Verbindens thermisch, insbesondere mittels eines Gravurkalanders, erfolgt.

14. Staubsaugerfilterbeutel nach Anspruch 12 oder 13, wobei die Schritte des Bereitstellens durch ein Ablegen der ersten Lage auf der ersten Faserlage oder durch ein Ablegen der ersten Faserlage auf der ersten Lage erfolgt.

15. Staubsaugerfilterbeutel nach einem der Ansprüche 12 - 14, wobei die erste Lage mit einem Flächengewicht von 7 bis 20 g/m² und/oder einer Dicke von 0,15 bis 0,8 mm bereitgestellt wird.

16. Staubsaugerfilterbeutel nach einem der Ansprüche 12 - 15, wobei die erste Lage einer Luftdurchlässigkeit von wenigstens 11000 l/(m²s), insbesondere von wenigstens 13000 l/(m²s), bereitgestellt wird.

17. Staubsaugerfilterbeutel nach einem der Ansprüche 12 - 16, wobei die erste Faserlage Fasern mit einer Feinheit von wenigstens 5 dtex, insbesondere von wenigstens 10 dtex, aufweist

18. Staubsaugerfilterbeutel nach einem der Ansprüche 12 - 17, weiterhin umfassend ein Bereitstellen einer zweite Faserlage, und wobei der Schritt des Verbindens ein Verbinden der zweiten Faserlage mit der ersten Lage an der der ersten Faserlage abgewandten Seite umfasst.

19. Staubsaugerfilterbeutel nach einem der Ansprüche 12 - 18, wobei der Schritt des Verbindens thermisch, insbesondere mittels Kalandrierens, und/oder mittels eines Klebemittels erfolgt.

## Claims

1. A vacuum cleaner filter bag having a filter medium comprising:
a first layer consisting of a netting with an air permeability of at least 10,000 l/(m²s),
a first fibre layer consisting of man-made fibres and/or vegetable fibres and connected to one side of the first layer,
wherein the first layer has a mass per unit area of 5 to 30 g/m² and a thickness of 0.1 to 1 mm,
wherein the first layer is a netting having a mesh opening of 2 mm to 30 mm,
wherein the first fibre layer is implemented in the form of a web layer or a non-woven layer,
wherein the first layer or the first fibre layer define the innermost layer of the bag wall,
wherein the composite consisting of the first layer and the first fibre layer has an air permeability of 1,000 to 12,000 l/(m²s),
wherein the netting is an extruded netting.

2. A vacuum cleaner filter bag according to claim 1, wherein the first layer has a mass per unit area of 7 to 20 g/m² and/or a thickness of 0.15 to 0.8 mm.

3. A vacuum cleaner filter bag according to one of the preceding claims, wherein the first layer has an average hole cross-sectional area of 2 to 900 mm², in particular of 5 to 30 mm², and/or an air permeability of at least 11,000 l/(m²s), in particular of at least 13,000 l/(m²s).

4. A vacuum cleaner filter bag according to one of the preceding claims, wherein the first fibre layer comprises fibres having a fineness of at least 5 dtex, in particular of at least 10 dtex.

5. A vacuum cleaner filter bag according to one of the preceding claims, wherein the filter medium comprises a second fibre layer made of man-made fibres and/or vegetable fibres, said second fibre layer being connected to the first layer on the side facing away from the first fibre layer.

6. A vacuum cleaner filter bag according to one of the preceding claims, wherein the first and/or the second fibre layer is/are thermally bonded to the first layer, in particular by means of calendering, and/or by means of an adhesive.

7. A vacuum cleaner filter bag according to claim 5 or 6, wherein the second fibre layer is implemented in the form of a web layer or a non-woven layer.

8. A vacuum cleaner filter bag according to one of the preceding claims, wherein the first and/or the second fibre layer is/are implemented in the form of a web layer or a non-woven layer consisting of staple fibres.

9. A vacuum cleaner filter bag according to one of the preceding claims, wherein the first and/or the second fibre layer is/are a dry-laid or wet-laid web layer or non-woven layer, an extruded web layer or an extruded non-woven layer.

10. A vacuum cleaner filter bag according to one of the preceding claims, wherein the first fibre layer and/or the second fibre layer have/has a mass per unit area of 5 to 50 g/m², in particular of 10 to 20 g/m².

11. A vacuum cleaner filter bag according to one of the preceding claims, wherein the composite consisting of the first layer and the first fibre layer has an air permeability of 4,000 to 10,000 l/(m²s), or wherein the composite of the first layer, the first fibre layer and the second fibre layer, has an air permeability of 1,000 to 12,000 l/(m²s), in particular of 4,000 to 10,000 l/(m²s).

12. Vacuum cleaner bag obtainable by a method of making a filter medium for a vacuum cleaner filter bag, comprising the following steps:
providing a first layer consisting of a netting with an air permeability of at least 10,000 l/(m²s),
providing, on one side of the first layer, a first fibre layer consisting of man-made fibres and/or vegetable fibres,
connecting said first layer to said first fibre layer,
wherein the first layer has a mass per unit area of 5 to 30 g/m² and a thickness of 0.1 to 1 mm,
wherein the first layer is a netting having a mesh opening of 2 mm to 30 mm,
wherein the first fibre layer is implemented in the form of a web layer or a non-woven layer,
wherein the first layer or the first fibre layer define the innermost layer of the bag wall,
wherein the netting is an extruded netting.

13. A vacuum cleaner bag according to claim 12, wherein the connecting step is executed thermally, in particular by means of an engraved calender.

14. A vacuum cleaner bag according to claim 12 or 13, wherein the steps of providing are executed by depositing the first layer on the first fibre layer, or by depositing the first fibre layer on the first layer.

15. A vacuum cleaner bag according to one of the claims 12 to 14, wherein the first layer is provided as a layer having a mass per unit area of 7 to 20 g/m² and/or a thickness of 0.15 to 0.8 mm.

16. A vacuum cleaner bag according to one of the claims 12 to 15, wherein the first layer is provided as a layer having an air permeability of at least 11,000 l/(m²s), in particular of at least 13,000 l/(m²s).

17. A vacuum cleaner bag according to one of the claims 12 to 16, wherein the first fibre layer comprises fibres having a fineness of at least 5 dtex, in particular of at least 10 dtex.

18. A vacuum cleaner bag according to one of the claims 12 to 17, further comprising the step of providing a second fibre layer, and wherein the connecting step comprises connecting said second fibre layer to the first layer on the side facing away from the first fibre layer.

19. A vacuum cleaner bag according to one of the claims 12 to 18, wherein the connecting step is executed thermally, in particular by means of calendering, and/or by means of an adhesive.

## Revendications

1. Sac à poussière pour aspirateur comprenant un milieu filtrant comprenant :
une première couche constituée d'un filet possédant une perméabilité à l'air s'élevant à au moins 10.000 l/(m²s) ;
une première couche fibreuse constituée par des fibres chimiques et/ou par des fibres végétales, qui est reliée à un côté de la première couche,
la première couche présentant un poids surfacique de 5 à 30 g/m² et une épaisseur de 0,1 à 1 mm,
la première couche étant un filet possédant une largeur de maille de 2 mm à 30 mm,
la première couche fibreuse étant réalisée sous la forme d'une couche de rembourrage ou sous la forme d'une couche de non-tissé,
la première couche ou la première couche fibreuse formant la couche la plus interne de la paroi du sac,
le composite constitué par la première couche et par la première couche fibreuse présentant une perméabilité à l'air s'élevant de 1.000 à 12.000 l/(m²s),
le filet étant un filet extrudé.

2. Sac à poussière pour aspirateur selon la revendication 1, dans lequel la première couche présente un poids surfacique de 7 à 20 g/m² et/ou une épaisseur de 0,15 à 0,8 mm.

3. Sac à poussière pour aspirateur selon l'une quelconque des revendications précédentes, dans lequel la première couche présente une aire de section moyenne de trou de 2 à 900 mm², en particulier de 5 à 30 mm², et/ou une perméabilité à l'air d'au moins 11.000 l/(m²s), en particulier d'au moins 13.000 l/(m²s).

4. Sac à poussière pour aspirateur selon l'une quelconque des revendications précédentes, dans lequel la première couche fibreuse présente des fibres possédant une finesse d'au moins 5 dtex, en particulier une finesse d'au moins 10 dtex.

5. Sac à poussière pour aspirateur selon l'une quelconque des revendications précédentes, dans lequel le milieu filtrant comprend une deuxième couche fibreuse constituée par des fibres chimiques et/ou par des fibres végétales, qui est reliée à la première couche du côté qui se détourne de la première couche fibreuse.

6. Sac à poussière pour aspirateur selon l'une quelconque des revendications précédentes, dans lequel la première couche fibreuse et/ou la deuxième couche fibreuse sont reliées à la première couche par voie thermique, en particulier par calandrage et/ou au moyen d'un adhésif.

7. Sac à poussière pour aspirateur selon la revendication 5 ou 6, dans lequel la deuxième couche fibreuse est réalisée sous la forme d'une couche de rembourrage ou sous la forme d'une couche de non-tissé.

8. Sac à poussière pour aspirateur selon l'une quelconque des revendications précédentes, dans lequel la première couche fibreuse et/ou la deuxième couche fibreuse sont réalisées sous la forme d'une couche de rembourrage ou sous la forme d'une couche de non-tissé, constituée par des fibres coupées.

9. Sac à poussière pour aspirateur selon l'une quelconque des revendications précédentes, dans lequel la première couche fibreuse et/ou la deuxième couche fibreuse représentent respectivement une couche de rembourrage ou une couche de non-tissé déposée par voie sèche ou déposée par voie humide, une couche de rembourrage obtenue par extrusion ou une couche de non-tissé obtenue par extrusion.

10. Sac à poussière pour aspirateur selon l'une quelconque des revendications précédentes, dans lequel la première couche fibreuse et/ou la deuxième couche fibreuse présentent un poids surfacique de 5 à 50 g/m², en particulier de 10 à 20 g/m².

11. Sac à poussière pour aspirateur selon l'une quelconque des revendications précédentes, dans lequel le composite constitué par une première couche et par une première couche fibreuse présente une perméabilité à l'air s'élevant de 4.000 à 10.000 l/(m²s), ou bien dans lequel le composite constitué par une première couche, par une première couche fibreuse et par une deuxième couche fibreuse, présente une perméabilité à l'air s'élevant de 1.000 à 12.000 l/(m²s), en particulier de 4.000 à 10.000 l/(m²s).

12. Sac à poussière pour aspirateur que l'on peut obtenir via un procédé pour la fabrication d'un milieu filtrant pour un sac à poussière pour aspirateur comprenant les étapes consistant à :
préparer une première couche constituée d'un filet possédant une perméabilité à l'air s'élevant à au moins 10.000 l/(m²s) ;
préparer une première couche fibreuse constituée par des fibres chimiques et/ou par des fibres végétales, sur un côté de la première couche ;
relier la première couche à la première couche fibreuse,
la première couche présentant un poids surfacique de 5 à 30 g/m² et une épaisseur de 0,1 à 1 mm,
la première couche étant un filet possédant une largeur de maille de 2 mm à 30 mm,
la première couche fibreuse étant réalisée sous la forme d'une couche de rembourrage ou sous la forme d'une couche de non-tissé,
la première couche ou la première couche fibreuse formant la couche la plus interne de la paroi du sac,
le filet étant un filet extrudé.

13. Sac à poussière selon la revendication 12, dans lequel l'étape de liaison a lieu par voie thermique, en particulier au moyen d'une calandre d'impression par gravure.

14. Sac à poussière selon la revendication 12 ou 13, dans lequel l'étape de la préparation a lieu en déposant la première couche sur la première couche fibreuse ou bien en déposant la première couche fibreuse sur la première couche.

15. Sac à poussière selon l'une quelconque des revendications 12 à 14, dans lequel on prépare la première couche avec un poids surfacique de 7 à 20 g/m² et/ou avec une épaisseur 0,15 à 0,8 mm.

16. Sac à poussière selon l'une quelconque des revendications 12 à 15, dans lequel on prépare la première couche avec une perméabilité à l'air d'au moins 11.000 l/(m²s), en particulier d'au moins 13.000 l/(m²s).

17. Sac à poussière selon l'une quelconque des revendications 12 à 16, dans lequel la première couche fibreuse présente des fibres possédant une finesse d'au moins 5 dtex, en particulier une finesse d'au moins 10 dtex.

18. Sac à poussière selon l'une quelconque des revendications 12 à 17, comprenant en outre la préparation d'une deuxième couche fibreuse, et dans lequel l'étape de liaison comprend une liaison de la deuxième couche fibreuse à la première couche du côté qui se détourne de la première couche fibreuse.

19. Sac à poussière selon l'une quelconque des revendications 12 à 18, dans lequel l'étape de liaison a lieu par voie thermique, en particulier au moyen d'un calandrage, et/ou au moyen d'un adhésif.
